# EUROPEAN PATENT SPECIFICATION

(11) **EP 1 640 225 B1**
(45) Date of publication and mention of the grant of the patent: **09.03.2011**
(21) Application number: 05017127.1
(22) Date of filing: 05.08.2005
(51) Int. Cl.: B60R 22/44, B60R 22/48

(54) **Seatbelt retracting method**
Verfahren zur Steuerung eines Sicherheitsgurtaufrollgeräts
Procédé de commande pour un enrouleur de ceinture de sécurité

(30) Priority: 24.09.2004 JP 2004276552
(43) Date of publication of application: 29.03.2006
(73) Proprietor: TAKATA CORPORATION, Minato-ku, Tokyo 106-8510 (JP)
(72) Inventor: Takao, Masato, Tokyo 106-8510 (JP); Tanaka, Koji, Tokyo 106-8510 (JP); Inuzuka, Koji, Tokyo 106-8510 (JP)
(74) Representative: Vossius & Partner

(56) References cited:
- US-A1- 2002 189 880
- US-A1- 2004 104 570
- US-B1- 6 494 395

## Description

The present invention relates to a seatbelt retracting method in a seatbelt retracting apparatus having a function of retracting a seatbelt by a motor, in which retracting operation is stopped when a load of the motor (except for an accelerating load) reaches or exceeds a predetermined value.

In the seatbelt retracting apparatus, it is required to comply simultaneously with the following conditions.
(1) To retract the seatbelt which is excessively pulled out positively until it fits a human's body, or when it is not worn by the human, to retract the seat belt which is pulled out positively until it is stored in a storage; and
(2) To prevent regions of chest of a passenger from being applied with unnecessary feeling of pressure in a state of normally worn.
However, in the seatbelt retracting apparatus using an urging force of a single return spring, there is a problem such that when a spring which provides a weak urging force is used for reducing the feeling of pressure applied to the regions of chest of the passenger when it is worn, a retracting force when retracting the belt (when storing the belt) is reduced, and hence operability and storability are lowered. In contrast, when a spring which provides a strong urging force is used for demonstrating an excessive retracting force during retraction, the feeling of pressure applied to the regions of chest of the passenger when it is normally worn may increased.

As a method of solving such a problem, an invention of a seatbelt retracting apparatus which retracts a seatbelt by a motor in addition to a retracting force by a return spring is disclosed for example in JP-A-3-552 (Patent Document 1), JP-A-2001-225720 (Patent Document 2) and US-B1-6494395.

In this manner, when the seatbelt is retracted by the motor, the following matters must be taken into consideration.
(1) To stop power supply to the motor when the entire quantity of the seatbelt is completely retracted (to stop the retracting operation). Otherwise, not only a battery power is uselessly consumed since unnecessary electric current is supplied to the motor, but also the motor to be used must be the type which is not overheated even though heavy current is flown for a long time.
(2) To stop power supply to the motor (to stop the retracting operation) when the seatbelt is unintentionally engaged with something, or when the operation to pull out the seat belt is carried out by the passenger when the seatbelt is retracted. Otherwise, not only the battery power is uselessly consumed since unnecessary electric current is supplied to the motor, or the seatbelt pulling-out operation by the passenger is resisted by a large resistance force, and hence a sense of discomfort may be applied.

In order to prevent occurrence of such a problem, in the seatbelt retracting control apparatus in the relate art, a control such as to detect the electric current to be supplied to the motor, and when a detected current value exceeds a predetermined value, determine that the condition is in the state of aforementioned (1) or (2), and stop power supply to the motor (stop the retracting operation) has been carried out.

Accordingly, there is a problem such that when power supply to the motor is stopped (retracting operation is stopped) when the seatbelt is unintentionally engaged with something during retraction of the seatbelt, the entire quantity of the seat belt is not retracted completely and remains unretracted.

In view of such circumstances, it is a subject of the present invention to provide a seatbelt retracting method which can retract an entire quantity of a seatbelt even when the seatbelt is unintentionally engaged with something during retraction of the seatbelt.

First means to solve the aforementioned problem is a seatbelt retracting method in a seatbelt retracting apparatus having a function to retract a seatbelt by a motor, in which retracting operation is stopped when a load of the motor (except for an accelerating load) reaches or exceeds a predetermined value, characterized in that when a time from the motor starts retraction due to disengagement between a buckle and a tongue of the seat belt until it stops for the first time is equal to or exceeds a first predetermined value, a state in which the retraction is stopped is maintained, and when the time from the motor starts retraction until it stops for the first time is smaller than the first predetermined value, the retracting operation starts again every time when the retracting operation is stopped until a total time of retracting operation carried out by the motor reaches or exceeds a second predetermined value (Claim 1).

In this means, when the first predetermined value is set to a time required until the seatbelt is completely stored when the normal retracting operation is carried out, or a time slightly shorter than that. Accordingly, when the normal retraction is carried out and the seatbelt is completely or almost completely stored, the state as is (the state in which the motor is kept stopped) is maintained.

When the time required until the motor stops for the first time is shorter than the first predetermined value, it is determined that the motor is stopped before the retraction is completed under an abnormal condition such as unintended engagement of the seatbelt or the like. Then, the retraction of the seatbelt is restarted. In this case, the retracting operation is restarted every time when the retracting operation is stopped until the total time of retracting operation carried out by the motor reaches or exceeds the second predetermined value.

The second predetermined value may be the same as the first predetermined value. However, when acceleration or deceleration of the motor is taken into consideration, it may be the time until the seatbelt is completely stored, or the time slightly shorter than that. Accordingly, the retracting operation is repeated until the seatbelt is completely, or almost completely stored.

Second means for solving the aforementioned subject is the first means, characterized in that the first predetermined value and the second predetermined value are changed in accordance with an electric current flowing in the motor (Claim 2).

When a voltage applied to the motor is constant, a constant relation is established between the current flowing in the motor and the motor speed. In other words, when the electric current flowing in the motor is large, a rotational speed of the motor is low, and when the electric current flowing in the motor is small, the rotational speed of the motor is high. Therefore, by varying the first predetermined value and the second predetermined value according to the electric current flowing in the motor, the retracting operation of the motor can be carried out accurately until the seatbelt is completely or almost completely stored.

According to the present invention, the seatbelt retracting method in which the entire quantity of the seatbelt can be retracted even when the seatbelt is unintentionally engaged with something during retraction of the seatbelt can be provided.

Referring now to the drawings, an embodiment of the present invention will be described.

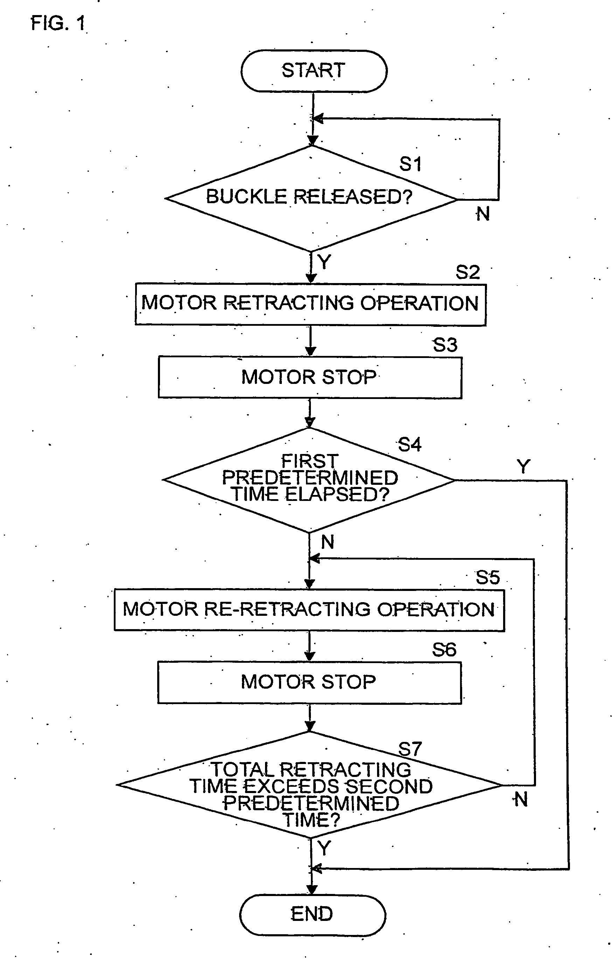

Fig. 1 is a flowchart showing a seatbelt retracting method as an example of the embodiment of the present invention.

In Step S1, whether or not engagement between a buckle and a tongue of a seatbelt is released is determined. In the case in which the engagement is not released, the procedure goes back to Step S1 and waits until the engagement is released.

When the engagement between the buckle and the tongue is released, the procedure goes to Step S2, where retraction of the seatbelt is started. In other words, a seatbelt retracting motor is driven. When retraction of the seatbelt is completed, or when unintended engagement of the seatbelt occurs, the motor stops. The stop of the motor can be detected by detecting a load current flowing in the motor. In this case, driving of the retracting motor is stopped once as described above (Step S3).

When the motor is stopped, the procedure goes to Step S4, where whether or not a first predetermined time has elapsed since the retraction of the seat belt has started is determined. The first predetermined time here is a time required until the seatbelt is completely stored when normal retraction is carried out, or a time slightly shorter than this period. When the first predetermined time has elapsed, it is determined that the retraction of the seatbelt is almost completed, and the procedure is ended.

When the first predetermined time is not elapsed, the step goes to Step S5, and the retracting operation of the motor is started again. Again, when the retraction of the seatbelt is completed, or when unintended engagement of the seatbelt occurs, the motor stops (Step S6).

In this case, the procedure goes to Step S7, and whether or not the total retracting time (total sum of the motor driving time) from the time when the retraction of the seatbelt is started reaches or exceeds a second predetermined time is determined. When the total retracting time does not reach the second predetermined time, the procedure goes back to Step S5, where the retracting operation of the motor is started again.

When the total retracting time reaches the second predetermined time, it is determined that the retraction of the seatbelt is carried out almost completely, and the procedure is ended. Here, the second predetermined time is set to the same as the first predetermined time, or when acceleration or deceleration of the motor is considered, it is set to the time required until the seatbelt is completely stored or the time slightly shorter than this time.

It is also possible to define the first predetermined time and the second predetermined time as a function of electric current flowing in the motor. Since driving of the motor is
achieved by applying a constant voltage, a stationary
current flowing in the motor (except for accelerating current, decelerating current) is taken into consideration to have a constant relation with respect to the motor speed. Therefore, by defining the first predetermined time and the second predetermined time as the function of the electric current flowing in the motor, whether or not the seatbelt is retracted almost completely can be detected more accurately.
Measurement of the electric current of the motor and definition of the first predetermined time and the second
predetermined time are carried out, for example, by measuring electric current during retraction of the motor in Step S2.

## Claims

1. A seatbelt retracting method in a seatbelt retracting apparatus having a function to retract a seatbelt by a motor, in which retracting operation is stopped when a load of the motor (except for an accelerating load) reaches or exceeds a predetermined value, **characterized in that** when a time from the motor starts retraction due to disengagement between a buckle and a tongue of the seat belt until it stops for the first time is equal to or exceeds a first predetermined value, a state in which the retraction is stopped is maintained, and when the time from the motor starts retraction until it stops for the first time is smaller than the first predetermined value, the retracting operation starts again every time when the retracting operation is stopped until a total time of the retracting operation carried out by the motor reaches or exceeds a second predetermined value.

2. The seatbelt retracting method according to Claim 1, **characterized in that** the first predetermined value and the second predetermined value are changed in accordance with an electric current flowing in the motor.

## Patentansprüche

1. Verfahren zum Aufrollen eines Sitzgurtes in eine Sitzgurtaufrolleinrichtung mit einer Funktion, den Sitzgurt mittels eines Motors aufzurollen, wobei der Aufrollvorgang gestoppt wird, wenn eine Motorlast (mit Ausnahme einer Beschleunigungslast) einen vorherbestimmten Wert erreicht oder überschreitet, **dadurch gekennzeichnet, dass**, wenn eine Zeit vom Motorstart zum Aufrollen nach Entkuppeln einer Schnalle und einer Zunge des Sitzgurtes bis zum ersten Stopp gleich oder größer als ein erster vorherbestimmter Wert ist, ein Zustand, bei dem das Aufrollen gestoppt ist, beibehalten wird, und, wenn eine Zeit vom Motorstart zum Aufrollen bis zum ersten Stopp kleiner als der erste vorherbestimmte Wert ist, immer, wenn der Aufrollvorgang gestoppt wird, der Aufrollvorgang nochmals startet, bis die Gesamtzeit des vom Motor ausgeführten Aufrollvorganges einen zweiten vorherbestimmten Wert erreicht oder überschreitet.

2. Verfahren zum Aufrollen eines Sitzgurtes nach Anspruch 1, **dadurch gekennzeichnet, dass** der erste vorherbestimmte Wert und der zweite vorherbestimmte Wert sich entsprechend der im Motor fließenden Stromstärke ändern.

## Revendications

1. Procédé de commande d'enroulement de ceinture de sécurité dans un enrouleur de ceinture de sécurité doté d'une fonction d'enroulement de ceinture par un moteur, où l'opération d'enroulement est stoppée si une charge du moteur (à l'exception d'une charge d'accélération) atteint ou dépasse une valeur prédéfinie, **caractérisé en ce que**, si un temps s'écoulant entre le déclenchement de l'enroulement par le moteur suite au désengagement d'une languette hors d'une boucle de la ceinture et le premier arrêt de celui-ci est supérieur ou égal à une première valeur prédéfinie, un état où l'enroulement est stoppé est maintenu, et **en ce que**, si le temps entre le déclenchement de l'enroulement par le moteur et le premier arrêt de celui-ci est inférieur à la première valeur prédéfinie, l'opération d'enroulement recommencera chaque fois que l'opération d'enroulement sera stoppée, jusqu'à ce qu'un temps total de l'opération d'enroulement exécutée par le moteur atteigne ou dépasse une deuxième valeur prédéfinie.

2. Procédé de commande d'enroulement de ceinture de sécurité selon la revendication 1, **caractérisé en ce que** la première valeur prédéfinie et la deuxième valeur prédéfinie sont modifiées en fonction d'un courant électrique circulant dans le moteur.
